# EUROPÄISCHE PATENTSCHRIFT

(11) **EP 2 435 499 B1**
(45) Veröffentlichungstag und Bekanntmachung des Hinweises auf die Patenterteilung: **03.04.2013**
(21) Anmeldenummer: 10721329.0
(22) Anmeldetag: 18.05.2010
(51) Int. Cl.: C08G 63/181, C08G 63/66, C08G 18/42

(54) **POLYESTERPOLYOLE AUS ISOPHTHALSÄURE UND/ODER TEREPHTHALSÄURE UND OLIGOALKYLENOXIDEN**
POLYESTER POLYOLS MADE OF ISOPHTHALIC ACID AND/OR TEREPHTHALIC ACID AND OLIGOALKYLENOXIDES
POLYESTERPOLYOLES À PARTIR D'ACIDE ISOPHTALIQUE ET/OU D'ACIDE TÉRÉPHTALIQUE ET D'OXYDES OLIGOALKYLES

(30) Priorität: 30.05.2009 EP 09007267
(43) Veröffentlichungstag der Anmeldung: 04.04.2012
(73) Patentinhaber: Bayer MaterialScience AG, 51368 Leverkusen (DE)
(72) Erfinder: NEFZGER, Hartmut, 50259 Pulheim (DE); BAUER, Erika, 41363 Jüchen (DE); VAN DE BRAAK, Johannes, 53773 Hennef (DE); SCHLOSSMACHER, Jürgen, 50126 Bergheim (DE); KASPEREK, Silvia, 50389 Wesseling (DE)
(86) Internationale Anmeldenummer: PCT/EP2010/003021
(87) Internationale Veröffentlichungsnummer: WO 2010/139395

(56) Entgegenhaltungen:
- US-A- 4 039 487
- US-A- 4 758 607
- US-A- 5 726 277

## Beschreibung

Die vorliegende Erfindung betrifft ein Verfahren zur Herstellung von Polyesterpolyole aus Isophthalsäure und/oder Terephthalsäure, Oligoalkylenoxiden und Phthalsäure, bzw. Phthalsäureanhydrid, die nach diesem Verfahren erhältlichen Polyesterpolyole sowie deren Verwendung zur Herstellung von PUR-/PIR-Hartschaumstoffen.

PUR-/PIR-Hartschaumstoffe werden in der heutigen Zeit vorwiegend auf Basis von Polyesterpolyolen hergestellt, da diese die Flammwidrigkeit der PUR-/PIR-Hartschaumstoffe und die Wärmeleitfähigkeit positiv beeinflussen. Bei der Herstellung der Polyesterpolyole finden als Rohstoffe vor allem Bernsteinsäure, Glutarsäure, Adipinsäure, Phthalsäure/-anhydrid, Terephthalsäure und Isophthalsäure Verwendung. Neben den Polyesterpolyolen werden gelegentlich noch Polyetherpolyole zugesetzt, um das Löslichkeitsverhalten von Pentanen gegenüber den Polyesterpolyolen zu verbessern oder die Sprödigkeit der isocyanurathaltigen PUR-/PIR-Hartschaumstoffe zu reduzieren.

Die Verwendung von aromatischen Säuren, insbesondere die Verwendung von Terephthalsäure bei der Herstellung von Polyesterpolyolen kann allerdings dazu führen, dass diese bei Raumtemperatur in fester Form vorliegen und damit deren Verarbeitung in technischen Prozessen erschwert wird.

US 4,758,607 offenbart zur Herstellung derartiger Polyesterpolyole, hochmolekulares Poly(ethylenterephthalat), PET, als Rohstoffbasis einzusetzen, welches durch molekulargewichtsabbauende Reaktionsmedien, wie z.B. niedermolekulare Glykole, auch in Gegenwart von niedermolekularen Polycarbonsäuren zu einem neuen Polyesterpolyol umgearbeitet wird. Nachteilig an einem derartigen Vorgehen ist jedoch, dass das PET zunächst einmal in einem aufwendigen Verfahren gesammelt werden muss. Weiterhin ist die Sortenreinheit sicherzustellen. Insofern es sich um Recycling Material aus z.B. PET-Getränkeflaschen handelt, müssen beispielsweise die Verschlüsse, zumeist aus Poly(ethylen), aufwendig entfernt werden. Insofern es sich um PET-Produktionsabfälle handelt, ist dieser Rohstoff nicht universell verfügbar, sondern an das Vorhandensein einer PET-Produktionsanlage gekoppelt. Ein weiterer Nachteil besteht ferner darin, dass ein Teil des zum Abbau des PET eingesetzten Glykols entsprechend der Lehre von US 4,758,607 destillativ wieder entfernt werden muss, was angesichts des hohen Siedepunktes von Glykolen energetisch nachteilig ist.

US 4,039,487 offenbart Polyesterpolyole auf Basis Terephthalsäure, Tetraethylenglykol und Phthalsäureanhydrid. US 4,039,487 offenabrt aber nicht, wie die dem Fachmann bekannten Nachteile einer Veresterung dieser Komponenten, nämlich lange Reaktionszeiten als Folge der Schwerlöslichkeit von Terephthalsäure, zu beseitigen sind nachteilig ist auch, dass in Folge der schnellen Reaktion von Tetraethylenglykol mit Phthalsäureanhydrid die Anzahl der für die Veresterung der Terephthalsäure zur Verfügung stehenden Hydroxylgruppen schon ganz zu Anfang der Umsetzung rasch verringert wird, was sich ungünstig auf die nachfolgende Umsetzung der reaktionsträgeren Terephthalsäure auswirkt, da auch deren Veresterungsgeschwindigkeit u.a. proportional zur Konzentration an freien Hydroxylgruppen ist. Es wurde daher eine Alternative zur Verwendung von deutlich höherer Mengen an Veresterungskatalysatoren gesucht, da derartige Katalysatoren nachfolgende Reaktionen mit diesen Polyesterpolyolen, z.B. die Herstellung von PUR-Schäumen, stören können.

Es war daher eine der Aufgaben der vorliegenden Erfindung, die zuvor genannten Nachteile des Stands der Technik zu beheben.

Viele herkömmliche PUR-/PIR-Hartschaumstoffe auf Basis von Polyesterpolyolen zeigen jedoch noch keine ausreichende Flammwidrigkeit, da sie in der Regel nur die Brandschutzklasse B3 nach DIN 4102-1 erfüllen.

Es war daher eine Aufgabe der vorliegenden Erfindung Polyesterpolyole zur Verfügung zu stellen, die bei ihrer Verwendung in PUR-/PIR-Hartschaumstoffen zu verbesserter Flammwidrigkeit führen, insbesondere zu PUR-/PIR-Hartschaumstoffen führen, die nach DIN 4102-1 die Brandschutzklasse B2 und/oder den SBI-Test (DIN EN 13823) erfüllen.

Eine weitere Aufgabe der vorliegenden Erfindung war es, Polyesterpolyole zur Verfügung zu stellen, die sich in technischen Prozessen bei der Herstellung von PUR-/PIR-Hartschaumstoffen leicht verarbeiten lassen und gleichzeitig zu verbesserter Flammwidrigkeit führen.

Die erfindungsgemäße Aufgabe wird überraschend gelöst durch das Erfindungsgemäße Verfahren zur Herstellung von Polyesterpolyolen mit einer Konzentration an Ethergruppen im Bereich zwischen 9.0 mol/kg Polyesterpolyol und 22 mol/kg Polyesterpolyol, dadurch gekennzeichnet, dass
(i) im ersten Schritt
   (A) Isophthalsäure, ggf. in Form eines C₁-C₄ Alkylesters, und/oder Terephthalsäure, ggf. in Form eines C₁-C₄ Alkylesters, mit
   (B) Oligoethylenglykol der Formel H-(OCH₂CH₂)ₙ-OH mit einer zahlenmittleren Anzahl Oxyethylengruppen n im Bereich zwischen 3.0 und 9.0
   in Gegenwart mindestens eines Katalysators ausgewählt aus der Gruppe bestehend aus Zinn(II)-Salzen, Wismut(II)-Salzen und Titantetraalkoxylaten bei einer Temperatur im Bereich zwischen 160 °C und 240 °C und einem Druck im Bereich zwischen 1 und 1013 mbar für eine Dauer im Bereich zwischen 7 und 100 Stunden umgesetzt werden, und
(ii) im zweiten Schritt die aus Schritt (i) resultierende Reaktionsmischung mit (C) Phthalsäure und/oder Phthalsäureanhydrid umgesetzt wird.

Ein C₁-C₄ Alkylester der Isophthalsäure bezeichnet einen Ester ausgewählt aus der Gruppe bestehend aus Isophthalsäuredimethylester, Isophthalsäurediethylester, Isophthalsäure-di-n-butylester und Isophthalsäurediisobutylester.

Bevorzugt ist die Komponente (A) Terephthalsäure, ggf. in Form eines C₁-C₄ Alkylesters. Ein C₁-C₄ Alkylester der Terephthalsäure bezeichnet einen Ester ausgewählt aus der Gruppe bestehend aus Terephthalsäuredimethylester, Terephthalsäurediethylester, Terephthalsäure-di-n-butylester und Terephthalsäurediisobutylester.

Im Sinne der vorliegenden Erfindung weist eine Verbindung der allgemeinen Formel H-(OCH₂CH₂)ₙ-OH mit
n = 1 eine Oxyethylengruppe und keine Ethergruppe auf;
n = 2 zwei Oxyethylengruppe und eine Ethergruppe auf;
n = 3 drei Oxyethylengruppen und zwei Ethergruppen auf;
n = 4 vier Oxyethylengruppen und drei Ethergruppen auf;
n = 5 fünf Oxyethylengruppen und vier Ethergruppen auf;
n = 6 sechs Oxyethylengruppen und fünf Ethergruppen auf;
n = 7 sieben Oxyethylengruppen und sechs Ethergruppen auf;
n = 8 acht Oxyethylengruppen und sieben Ethergruppen auf und
n = 9 neun Oxyethylengruppen und acht Ethergruppen auf.

Die Komponente (B) ist vorzugsweise ein Gemisch aus verschiedenen oligomeren Ethylenglykolen, wobei der Wert n in der allgemeinen Formel H-(OCH₂CH₂)ₙ-OH die durchschnittliche Anzahl von Oxyethylengruppen in der Komponente (B) angibt. Besonders bevorzugt enthält die Komponente (B) an Oligomerem mit n = 2 weniger als 8 Gew.-%, ganz besonders bevorzugt weniger als 3 Gew.-%. Damit können sich für den Wert n auch nicht ganze Werte wie beispielsweise 3.1, 3.2 oder 3.24 ergeben.

Vorzugsweise weisen Oligoethylenglykole (B) zahlenmittlere Molekulargewichte im Bereich von 145 bis 450 g/mol, besonders bevorzugt im Bereich von 150 bis 250 g/mol auf.

Bevorzugt weist das nach den erfindungsgemäßen Verfahren hergestellte hergestellte Polyesterpolyol eine Menge an Ethergruppen im Bereich zwischen 10 mol/kg Polyesterpolyol und 17 mol/kg Polyesterpolyol auf.
Vorzugsweise liegt die Komponente (A) in einer Menge von 8 bis 50 Gew.-%, besonders bevorzugt in einer Menge von 10 bis 35 Gew.-%, bezogen auf die Gesamtmenge der zur Herstellung des erfindungsgemäßen Polyesterpolyols eingesetzten Komponenten A, B und C vor.

Vorzugsweise liegt die Komponente (B) in einer Menge von 50 bis 92 Gew.-%, besonders bevorzugt in einer Menge von 65 bis 90 Gew.-%, bezogen auf die Gesamtmenge der zur Herstellung des erfindungsgemäßen Polyesterpolyols eingesetzten Komponenten A, B und C vor.

Vorzugsweise liegt die Komponente (C) in einer Menge von 1 bis 25 Gew.-%, besonders bevorzugt in einer Menge von 1 bis 22 Gew.-%, ganz besonders bevorzugt in einer Menge von 5 bis 18 Gew.-%, bezogen auf die Gesamtmenge der zur Herstellung des erfindungsgemäßen Polyesterpolyols eingesetzten Komponenten A, B und C vor.

Vorzugsweise weist das nach den erfindungsgemäßen Verfahren hergestellte Polyesterpolyol eine Hydroxylzahl im Bereich zwischen 100 mg KOH/g und 400 mg KOH/g, besonders bevorzugt im Bereich zwischen 110 mg KOH/g und 300 mg KOH/g, ganz besonders bevorzugt im Bereich zwischen 150 mg KOH/g und 260 mg KOH/g, auf.

Die Hydroxylzahl der Polyesterpolyole lässt sich anhand der Norm DIN 53240 bestimmen. Die Säurezahl der Polyesterpolyole lässt sich anhand der Norm DIN 53402 bestimmen.
Die Molmassen der erfindungsgemäßen Polyesterpolyole liegen vorzugsweise im Bereich von 280 bis 1120 Da, besonders bevorzugt von 370 bis 1020 Da, ganz besonders bevorzugt von 430 bis 750 Da.

Vorzugsweise weist das nach den erfindungsgemäßen Verfahren hergestellte Polyesterpolyol eine Säurezahl im Bereich von 0,1 KOH/g bis 4 mg KOH/g, besonders bevorzugt im Bereich von 0,15 KOH/g bis 2,8 KOH/g, auf.

Vorzugsweise weist das nach den erfindungsgemäßen Verfahren hergestellte Polyesterpolyol eine Viskosität gemessen nach DIN 53019 im Bereich zwischen 400 mPas und 10000 mPas, besonders bevorzugt im Bereich zwischen 500 mPas und 7000 mPas, bei 25 °C auf.

Vorzugsweise weist das Oligoethylenglykol (B) eine zahlenmittlere Anzahl Oxyethylengruppen n im Bereich zwischen 3,1 und 9, besonders bevorzugt im Bereich zwischen 3,5 und 8, auf.

Vorzugsweise weist das Polyesterpolyol einen Schmelzpunkt im Bereich zwischen -40 °C und 25 °C, besonders bevorzugt im Bereich zwischen -20 und 23 °C, auf.

Bevorzugt wird das erfindungsgemäße Polyesterpolyol hergestellt aus einer Mischung umfassend (i) im ersten Schritt Terephthalsäure (A) und Oligoethylenglykol (B) der Formel H-(OCH₂CH₂)ₙ-OH mit einer zahlenmittleren Anzahl Oxyethylengruppen n im Bereich von 3.0 bis 9.0, und (ii) im zweiten Schritt wenigstens eine Komponente (C) ausgewählt aus der Gruppe bestehend aus Phthalsäure und Phthalsäureanhydrid.

Eine bevorzugte Ausführungsform der vorliegenden Erfindung ist ein Verfahren zur Herstellung der Polyesterpolyole, wobei im ersten Schritt (i) die Komponenten (A) und (B) in Gegenwart eines Katalysators ausgewählt aus der Gruppe bestehend aus Zinn(II)-Salzen, Wismut(II)-Salzen und Titantetraalkoxylaten bei einer Temperatur im Bereich zwischen 160 °C und 240 °C und einem Druck im Bereich zwischen 1 und 1013 mbar für eine Dauer im Bereich zwischen 7 und 100 Stunden umgesetzt werden.

Die Komponente (C) wird vorzugsweise erst zugesetzt, nachdem im ersten Schritt (i) 80 - 95% des Reaktionswassers und ggf. niedermolekularen Alkohols (beispielsweise Methanol, Ethanol, etc., d.h. solche Alkohole, die aus der Umsetzung der Komponenten (A) und (B) entstanden sind) abdestilliert wurden. Die Umsetzung des aus Schritt (i) resulierenden Zwischenproduktes (entstanden durch Reaktion der Komponenten (A) und (B)) mit der später, d.h. in Schritt (ii) zugesetzten Komponente (C) erfolgt bevorzugt bei einer Temperatur im Bereich zwischen 160 und 240 °C und einem Druck im Bereich zwischen 1 und 150 mbar für eine Dauer im Bereich zwischen 1 und 22 Stunden.

Zur Herstellung der erfindungsgemäßen Polyesterpolyole können alle dem Fachmann bekannten Katalysatoren verwendet werden. Bevorzugt werden Zinn-(II)-chlorid, Wismut(II)-chlorid und Titantetraalkoxylate (beispielsweise Titantetramethanolat oder Titantetraethanolat) verwendet. Besonders bevorzugt ist die Verwendung von Zinndichloriddihydrat. Diese Katalysatoren (ggf. die Summe der eingesetzten Mengen) werden in einer Menge von 20 bis 200 ppm, ganz besonders bevorzugt 45 bis 80 ppm, bezogen auf die Summe der Gewichtsteile aller Einsatzkomponenten A bis C eingesetzt.

Die erfindungsgemäße Umsetzung der Komponenten zur Herstellung des Polyesterpolyols erfolgt vorzugsweise in Substanz (d.h. ohne einer Zugabe von Lösungsmittel).

Weitere Gegenstände der vorliegenden Erfindung ist das nach dem erfindungsgemäßen Verfahren hergestellte Polyesterpolyol sowie ein Verfahren zur Herstellung eines PUR-, bzw. PUR/PIR-Schaumstoffes umfassend die Schritte
a) Umsatz wenigstens eines nach dem erfindungsgemäßen Verfahren hergestellte Polyesterpolyols mit
b) wenigstens einer polyisocyanathaltigen Komponente,
c) wenigstens einem Treibmittel,
d) wenigstens einem oder mehreren Katalysatoren,
e) gegebenenfalls wenigstens einem Flammschutzmittel und/oder weiteren Hilfs- und Zusatzstoffen
f) gegebenenfalls wenigstens einer Verbindung mit mindestens zwei gegenüber Isocyanat reaktiven Gruppen.

Als polyisocyanathaltige Komponente kommen die üblichen aliphatischen, cycloaliphatischen und insbesondere aromatischen Di- und/oder Polyisocyanate in Frage. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI). Die Isocyanate können auch modifiziert sein, beispielsweise durch Einbau von Uretdion-, Carbamat-, Isocyanurat-, Carbodiimid-, Allophanat- und insbesondere Urethangruppen. Zur Herstellung von Polyurethan-Hartschaumstoffen wird insbesondere Polymer-MDI eingesetzt. Die Isocyanurat-Bildung erfolgt im Stand der Technik praktisch ausschließlich während der Verschäumungsreaktion und führt zu flammwidrigen PUR/PIR-Schaumstoffen, welche bevorzugt im technischen Hartschaum, beispielsweise im Bauwesen als Dämmplatte, Sandwichelemente, Rohrisolierungen und LKW Aufbauten eingesetzt werden.
Als Verbindungen mit mindestens zwei gegenüber Isocyanat reaktiven Gruppen, das heißt mit mindestens zwei mit Isocyanatgruppen reaktiven Wasserstoffatomen können allgemein Verbindungen eingesetzt werden, die nachfolgend allgemein beschrieben werden.
Als Verbindungen mit mindestens zwei gegenüber Isocyanat reaktiven Gruppen kommen insbesondere solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen. Zur Herstellung der nach dem erfindungsgemässen Verfahren bevorzugt hergestellten Polyurethanhartschaumstoffe kommen insbesondere Verbindungen mit 2 bis 8 OH-Gruppen zum Einsatz. Vorzugsweise eingesetzt werden Polyetherpolyole und/oder Polyesterpolyole. Die Hydroxylzahl der verwendeten Polyetherpolyole und/oder Polyesterpolyole beträgt bei der Herstellung von Polyurethanhartschaumstoffen vorzugsweise 25 bis 850 mg KOH/g, besonders bevorzugt 25 bis 550 mg KOH/g, die Molekulargewichte sind vorzugsweise größer als 300 g/mol. Bevorzugt enthält die Komponente (f) Polyetherpolyole, die nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden. Weiterhin kann die Herstellung der Polyetherpolyole mittels Doppelmetallcyanidkatalyse erfolgen, wobei hier auch eine kontinuierliche Fahrweise möglich ist.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht Glycerin, Trimethylolpropan, Pentaerythrit, Sacharose, Sorbit, Methylamin, Ethylamin, Isopropylamin, Butylamin, Benzylamin, Anilin, Toluidin, Toluoldiamin, Naphtylamin, Ethylendiamin, Diethylentriamin, 4,4'-Methylendianilin, 1,3-Propandiamin, 1,6-Hexandiamin, Ethanolamin, Diethanolamin, Triethanolamin sowie andere zwei oder mehrwertige Alkohole, die ihrerseits auch Oligoetherpolyole sein können oder ein- oder mehrwertige Amine, sowie Wasser.

Ferner kann die Komponente (f) optional Polyesterpolyole, Kettenverlängerungs- und/oder Vernetzungsmitteln enthalten. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400 g/mol, vorzugsweise von 60 bis 300, zum Einsatz. Bevorzugt setzt man als Verbindung (f) Polyetherpolyole mit einer Hydroxylzahl grösser 160, besonders bevorzugt grösser 200 mg KOH/g und besonders bevorzugt einer Funktionalität zwischen 2,9 und 8 ein. Besonders bevorzugt setzt man als gegenüber Isocyanaten reaktive Verbindungen (f) Polyetherpolyole ein, die ein Äquivalentgewicht, d.h. Molekulargewicht dividiert durch die Funktionalität, kleiner 400 g/mol, bevorzugt kleiner 200 g/mol aufweisen. Die Verbindung (f) liegt im Allgemeinen in flüssiger Form vor.

Als Treibmittelkomponente (c) werden bevorzugt Kohlenwasserstoffe eingesetzt. Diese können im Gemisch mit Wasser und/oder weiteren physikalischen Treibmitteln eingesetzt werden. Darunter versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum

Beispiel perfluorierte Alkane, wie Perfluorhexan, Fluorchlorkohlenwasserstoffe, sowie Ether, Ester, Ketone und/oder Acetale.

Die Treibmittelkomponente (c) setzt man bevorzugt in einer Menge von 2 bis 45 Gew.-%, bevorzugt 3 bis 30 Gew.-%, besonders bevorzugt 4 bis 20 Gew.-%, bezogen auf das Gesamtgewicht der Komponenten (b) bis (f) ein. In einer bevorzugten Ausführungsform enthält das Treibmittelgemisch (c) Kohlenwasserstoffe, insbesondere n-Pentan und/oder Cyclopentan und Wasser. Besonders bevorzugte Kohlenwasserstoffe sind n-Pentan, Cyclopentan, iso-Pentan und/oder Mischungen der Isomeren. Insbesondere werden Cyclopentan und/oder n-Pentan als Treibmittel (c) verwendet.

Als Katalysatoren (d) für die Herstellung der erfindungsgemäßen Polyurethan- bzw. Polyisocyanurat-Schaumstoffe werden die üblichen und bekannten Polyurethan- bzw. Polyisocyanuratbildungskatalysatoren eingesetzt, beispielsweise organische Zinnverbindungen, wie Zinndiacetat, Zinndioctoat, Dibutylzinndilaurat und/oder stark basische Amine wie 2,2,2-Diazabicyclooctan, Triethylamin oder vorzugsweise Triethylendiamin, N,N-Dimethylcyclohexylamin oder Bis(N,N-Dimethylaminoethyl)ether, sowie zur Katalyse der PIR-Reaktion Kaliumacetat, Kaliumoctoat und aliphatische quaternäre Ammoniumsalze.

Die Katalysatoren werden vorzugsweise in einer Menge von 0,05 bis 3 Gew.-%, vorzugsweise 0,06 bis 2 Gew.-%, bezogen auf das Gesamtgewicht aller Komponenten eingesetzt.

Die Umsetzung der vorstehend genannten Komponenten erfolgt gegebenenfalls in Anwesenheit von (e) Zusatzstoffen, wie z.B. Flammschutzmittel, Füllstoffen, Zellreglern, Schaumstabilisatoren, oberflächenaktiven Verbindungen und/oder Stabilisatoren gegen oxidativen, thermischen oder mikrobiellen Abbau oder Alterung, bevorzugt Flammschutzmittel und/oder Schaumstabilisatoren. Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxyalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol A, alkyliertem Bisphenol A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol A. Als Alkoxylierungsreagenzien können beispielsweise Ethylenoxid, Propylenoxid, Poly-THF sowie hoehere Homologe verwendet werden.

Als Flammschutzmittel können im Allgemeinen die aus dem Stand der Technik bekannten Flammschutzmittel verwendet werden. Geeignete Flammschutzmittel sind beispielsweise bromierte Ether (z.B. Ixol^{®} B251), bromierte Alkohole wie Dibromneopentylalkohol, Tribromneopentylalkohol und PHT-4-Diol sowie chlorierte Phosphate wie z.B. Tris-(2-chlorethyl)phosphat, Tris-(2-chlorisopropyl)phosphat (TCPP), Tris(1,3-dichlorisopropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel, wie roter Phosphor, roten Phosphor enthaltende Zubereitungen, Aluminiumoxidhydrat, Antimontrioxid, Ammoniumpolyphosphat und Calciumsulfat oder Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PUR- bzw. PUR-/PIR-Hartschaumstoffe verwendet werden. Als weitere flüssige halogenfreie Flammschutzmittel können Diethylethanphosphonat (DEEP), Triethylphosphat (TEP), Dimethylpropylphosphonat (DMPP), Diphenylkresylphosphat (DPK) und andere verwendet werden. Die Flammschutzmittel werden im Rahmen der vorliegenden Erfindung bevorzugt in einer Menge von 0 bis 30 Gew.-%, besonders bevorzugt von 2 bis 25 Gew.-%, insbesondere von 2,5 bis 15 Gew.-%, bezogen auf das Gesamtgewicht der Komponenten (b) bis (e) verwendet.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Zur Herstellung der Polyurethan-Hartschaumstoffe werden die Polyisocyanate (b) und die Komponenten (a) und ggf. (f) in solchen Mengen zur Umsetzung gebracht, dass die Isocyanat-Kennzahl des Schaumes 90 bis 600, bevorzugt 150 bis 500, besonders bevorzugt 180 bis 450 beträgt.

Die Polyurethan-Hartschaumstoffe können diskontinuierlich oder kontinuierlich mit Hilfe bekannter Verfahren hergestellt werden. Dem Fachmann bekannt sind u.a. die Blockschaumherstellung (kontinuierlich und diskontinuierlich), die Verwendung in Einkomponentensystemen (diskontinuierlich) und im Isolierformschaum (diskontinuierlich). Die hier beschriebene Erfindung bezieht sich auf alle Verfahren, vorzugsweise jedoch auf das kontinuierliche Doppelbandverfahren, wobei als Deckschichten flexible und/oder starre Materialien verwendet werden können.

Die erfindungsgemässen Polyurethanhartschaumstoffe weisen bevorzugt eine Geschlossenzelligkeit grösser 90 %, besonders bevorzugt größer 95% auf.

Bevorzugt weisen die erfindungsgemäßen PUR-, bzw. PUR-/PIR-Schäume eine Dichte von 28 g/m³ bis 300 g/m³, besonders bevorzugt von 30 g/m³ bis 50 g/m³ auf.

Der Einsatz der erfindungsgemässen Polyurethanhartschaumstoffen erfolgt insbesondere zur Wärmedämmung, beispielsweise von Kühlgeräten, Behältern oder Gebäuden, z.B. in Form von gedämmten Rohren, Sandwichelementen, Dämmplatten oder Kühlgeräten.

Als Polyurethane im Sinne der vorliegenden Patentanmeldung werden auch polymere Isocyanataddukte verstanden, die neben Urethangruppen noch weitere Gruppen enthalten, wie sie beispielsweise durch Reaktion der Isocyanatgruppe mit sich selbst entstehen, beispielsweise Isocyanuratgruppen, oder die durch Reaktion der Isocyanatgruppen mit anderen Gruppen als mit Hydroxylgruppen entstehen, wobei die genannten Gruppen meist gemeinsam mit den Urethangruppen im Polymer vorliegen.

Ein weiterer Gegenstand der vorliegenden Erfindung ist die Verwendung von Polyesterpolyolen, die nach dem vorstehend beschriebenen Verfahren hergestellt werden, zur Herstellung von Polyurethan. Polyurethan ist ein vielseitiger Werkstoff, der in vielen Bereichen Anwendung findet. Auf Grund der großen Vielfalt der verwendbaren Rohstoffe können Produkte mit den unterschiedlichsten Eigenschaften hergestellt werden, beispielsweise Hartschäume zur Dämmung, Blockweichschäume für Matratzen, Formweichschäume für Autositze und Sitzkissen, Akustikschäume zur Schalldämmung, thermoplastische Schäume, Schuhschäume oder mikrozelluläre Schäume, aber auch kompakte Giessysteme und thermoplastische Polyurethane.

### Beispiele

### Zusammenstellung der in den Beispielen verwendeten Rohstoffe

Terephthalsäure: Interquisa
Phthalsäureanhydrid (PSA): Technisches PSA der Fa. Lanxess
PEG 200: Fa. BASF
PEG 180: Fa. Ineos
Ethylenglykol (EG): Fa. Ineos
Zinn-II-Chlorid-dihydrat: Fa. Aldrich
Titan tetrabutylat: Fa. Aldrich

### Verwendete Geräte und Analysenmethoden:

Viskosimeter: MCR 51 der Fa. Anton Paar
Hydroxylzahl: anhand der Norm DIN 53240
Säurezahl: anhand der Norm DIN 53402

### A) Herstellung der Polyesterpolyole

### Beispiel A-1 (erfindungsgemäß):

In einem 4-Liter 4-Halskolben, ausgestattet mit Heizpilz, mechanischem Rührwerk, Innenthermometer, 40 cm-Füllkörper-Kolonne, Kolonnenkopf, absteigendem Intensivkühler, sowie Membranvakuumpumpe wurden 2355 g (11,78 Mol) PEG 200 unter Stickstoffüberschleierung bei 100°C vorgelegt. Man rührte im Verlauf von ca. 5 Minuten 412 g (2,48 Mol) Terephthalsäure ein und gab 78 mg Zinn-dichlorid dihydrat zu. Man erhitzte für 5 Stunden auf 230°C, wobei Wasser abdestillierte und die Trübung des Reaktionsgemisches verschwand. Man gab dann 367 g (2,48 Mol) Phthalsäureanhydrid (PSA) zu und erhitzte für 4 Stunden auf 230°C. Danach wurden weitere 78 mg Zinn-dichlorid dihydrat zugegeben und Vakuum angelegt, zuletzt 60 mbar. Unter diesen Bedingungen ließ man weitere 15 Stunden kondensieren. Man kühlte ab und bestimmte folgende Eigenschaften:

### Analyse des Polyesters:

Hydroxylzahl: 236,6 mg KOH/g
Säurezahl: 0,2 mg KOH/g
Viskosität: 720 mPas (25°C)
Die Ester der weiteren erfindungsgemäßen Beispiele A-2 bis A-4 und A-6 (V) wurden analog hergestellt.

### Beispiel A-5 (Vergleich):

In einem 4-Liter 4-Halskolben, ausgestattet mit Heizpilz, mechanischem Rührwerk, Innenthermometer, 40 cm-Füllkörper-Kolonne, Kolonnenkopf, absteigendem Intensivkühler, sowie Membranvakuumpumpe wurden 1444 g (9,76 Mol) PSA bei 180°C vorgelegt. Man gab im Verlauf von ca. 30 Minuten 1034 g (9,76 Mol) Diethylenglykol zu und rührte für 60 Minuten bei 180°C. Danach wurden 356 g (2.44 Mol) Adipinsäure und 429 g (6,92 Mol) Ethylenglykol zugegeben. Aus dieser Mischung wurde für 3,5 Stunden bei Normaldruck Wasser abdestilliert. Man setzte 65 mg Zinn-dichlorid dihydrat zu und vervollständigte die Reaktion für weitere 30 Stunden bei 200 °C und 70 mbar und setzte 352 g (3,32 Mol) Diethylenglykol nach und ließ für weitere 6 Stunden bei 200 °C und Normaldruck weiterreagieren. Man kühlte ab und bestimmte folgende Eigenschaften:

### Analyse des Polyesters:

Hydroxylzahl: 235,2 mg KOH/g
Säurezahl: 0,7 mg KOH/g
Viskosität: 9150 mPas (25°C)

**Tabelle 1: Zusammensetzung und Eigenschaften erfindungsgemäßer und nicht erfindungsgemäßer Polyesterpolyole**

| Beispiel: | | A-1 | A-2 | A-3 | A-4 | A-5 (V) | A-6 (V) |
|---|---|---|---|---|---|---|---|
| Terephthalsäure | [g] | 412 | 472 | 524 | 586 | 0 | 887 |
| PEG 200 | [g] | 2355 | 2261 | 1956 | 1809 | 0 | 967 |
| Adipinsäure | [g] | | | | | 356 | |
| Ethylenglykol | [g] | | | 196 | 219 | 429 | 644 |
| Diethylenglykol | [g] | | | | | 1386 | |
| PSA | [g] | 367 | 420 | 467 | 522 | 1444 | 791 |
| Zinn-dichlorid-dihydrat | [mg] | 156 | 156 | 156 | 156 | 65 | |
| Titantetrabutylat | [mg] | | | | | | 235 |
| | | | | | | | |
| Hydroxylzahl | [mg KOH/g] | 236,6 | 193,4 | 231,6 | 192,8 | 235,2 | 155,5 |
| Säurezahl | [mg KOH/g] | 0,2 | 0,3 | 1,8 | 2,7 | 0,7 | 0,4 |
| Viskosität, 25°C | [mPas] | 720 | 1390 | 1500 | 3230 | 9150 | fest |
| | | | | | | | |
| Anteil Terephthalsäure bzgl. | [Gew.-%] | 13,1 | 15,0 | 16,7 | 18,7 | 0 | 27,0 |
| Anteil Ethergruppen aus Oligoethylenglykol | [mol/kg Ester] | 16,3 | 15,6 | 13,5 | 12,5 | 3,9 | 5,1 |
| Anteil Ethylenglykol | [Gew.-%] | 0 | 0 | 6,2 | 7,0 | 11,9 | 19,6 |
| Anteil PSA | [Gew.-%] | 11,7 | 13,3 | 14,9 | 16,6 | 39,9 | 24,0 |

| | | | | | | | |
|---|---|---|---|---|---|---|---|
| V = Vergleichsbeispiel | | | | | | | |

Vergleichsbeispiel A-5 und Vergleichsbeispiel A-6 sind nicht erfindungsgemäß, da in A-5 (Vergleich) weder Terephthalsäure noch Oligoethylenglykol verwendet wurde, bzw. in A-5 (Vergleichs) und A-6 (Vergleich) der Anteil der Ethergruppen aus Oligoethylenglykolen unterhalb von 9 mol/kg Ester liegt . A-6 (Vergleich) ist darüber hinaus bei Raumtemperatur nicht flüssig.

### Rohstoffe für PUR-/PIR-Hartschäume:

a.) Polyester aus Bspl. A-1, A-2, A-3, A-4, und A-5(V).

### Schäumzusatzmittel, bestehend aus b.) - f.):

b.) TCPP, Tris(1-chloro-2-propyl)-phosphat der Fa. Lanxess
c.) TEP, Triethylphosphat der Fa. Levagard
d.) Additiv 1132 der Fa. Bayer MaterialScience
e.) PET V 657, trifunktionelles Polyetherpolyol mit einer Molmasse von ca. 660 Da. der Fa. Bayer MaterialScience AG
f.) Stabilisator Polyetherpolysiloxancopolymerisat der Fa. Evonik

Das in Tabelle 2 angegebene Schäumzusatzmittel (b-f) besteht aus 20 Gewichtsteilen Komponente (b), 5 Gewichtsteilen Komponente (c), 2,2 Gewichtsteilen Komponente (d), 5 Gewichtsteilen Komponente (e) und 4 Gewichtsteilen Komponente (f).

| | |
|---|---|
| Aktivator (g) | Carbonsäuresalz (PIR-Katalysator): Desmorapid^{®} VP.PU 30HB13 der Fa. Bayer MaterialScience AG, Leverkusen, Deutschland. |
| Isocyanat: (h) | Desmodur^{®} VP.PU 44V70L, polymeres Polyisocyanat auf Basis 4,4'-Diphenylmethandiisocyanat mit einem NCO-Gehalt von ca. 31,5 Gew.-% der Fa. Bayer MaterialScience AG, Leverkusen, Deutschland. |
| Treibmittel (i.) | n-Pentan, Fa. Kremer&Martin |

**Tabelle 2: Zusammensetzung und Eigenschaften erfindungsgemäßer und nicht erfindungsgemäßer Polyesterpolyol basierter PUR-/PIR-Schäume**

| Beispiel | | B-1 | B-2 | B-3 | B-4 | B-5 (V) |
|---|---|---|---|---|---|---|
| Polyol aus Bsp. A-1 | [g] | 63,8 | | | | |
| Polyol aus Bsp. A-2 | [g] | | 63,8 | | | |
| Polyol aus Bsp. A-3 | [g] | | | 63,8 | | |
| Polyol aus Bsp. A-4 | [g] | | | | 63,8 | |
| Polyol aus Bsp. A-5 (V) | [g] | | | | | 63,8 |
| Schäumzusatzmittel | [g] | 36,2 | 36,2 | 36,2 | 36,2 | 36,2 |
| n-Pentan (i) | [g] | 16 | 16 | 15,4 | 14,2 | 15,9 |
| Desmodur 44V70 L | [g] | 165 | 142 | 157 | 137 | 165 |
| Index | | 344 | 346 | 345 | 345 | 345 |
| Eigenschaften: | | | | | | |
| gef. Kernrohdichte | [kg/m³] | 38,2 | 38,2 | 37,7 | 35,4 | 36,1 |
| Abbindezeit | [s] | 41 | 41 | 42 | 43 | 36,1 |
| Klebfreizeit | [s] | 150 | 110 | 115 | 120 | 82 |
| KBT Klasse | | B2 | B2 | - | - | B2 |
| ∅ Flammenhöhe | [mm] | 115 | 123 | - | - | 125 |
| Brandklasse/Flammhöhe (BVD-Test) | [mm] | Kl. 5/100-120 | Kl. 3/110 | Kl. 5/120 | Kl. 5/123 | Kl. 5/100-110 |
| Dimensionstabilität: Lagerung 24h bei 80°C | [%, x-Richtung] | 0,2 | 0,2 | 0,0 | 0,0 | 0,6 |
| | [%, y-Richtung] | 0,2 | 0,1 | 0,0 | 0,0 | 0,6 |
| | [%, z-Richtung] | -0,8 | -0,8 | -0,6 | -0,8 | -0,4 |

| | | | | | | |
|---|---|---|---|---|---|---|
| V = Vergleichsbeispiel | | | | | | |

Index bezeichnet das molare Verhältnis aller Isocyanatgruppen zu allen zerewittinof-aktiven Wasserstoffatomen.

Im Labormaßstab werden alle Rohstoffe der Hartschaumrezeptur mit Ausnahme der Polyisocyanatkomponente in einem Pappbecher eingewogen, auf 23°C temperiert, mittels eines Pendraulik-Labormischers (z.B. Type LM-34 der Fa. Pendraulik) vermischt und verflüchtigtes Treibmittel (Pentan) ggf. ergänzt. Anschließend wurde unter Rühren die Polyisocyanatkomponente (ebenfalls auf 23°C temperiert) zur Polyolmischung gegeben, diese intensiv vermischt und das Reaktionsgemisch in mit Papier ausgekleidete Holzformen gegossen. Während des Aufschäumvorganges wurden Abbindezeit und Klebfreizeit ermittelt. Nach 24 Stunden wurden aus dem Schaumrohling würfelförmige Prüfkörper der Kantenlänge 9 cm ausgeschnitten.

Man bestimmte folgende Eigenschaften:

| | |
|---|---|
| Dimensionsstabilität: | Wird bestimmt, indem die Dimensionsänderung von würfelförmigen Prüfkörpern nach 24-stündiger Lagerung bei +80°C ermittelt wird. Erfindungsgemäße Schäume weisen für jede Raumrichtung relative Längenänderungen von höchstens 1% (absolut) auf. |
| Kernrohdichte: | Wird aus dem Volumen und dem Gewicht eines ausgeschnittenen würfelförmigen Prüfkörpers ermittelt. |
| KBT: | Kleinbrennertest nach DIN 4102-1. Erfindungsgemäße Hartschäume erreichen die Brandschutzklasse B2. |
| BVD-Test: | entsprechend Schweizer Grundtest zur Ermittlung des Brennbarkeitsgrades von Baustoffen der Vereinigung kantonaler Feuerversicherungen in der Ausgabe von 1988, mit den Nachträgen von 1990, 1994,1995 und 2005. (zu beziehen bei Vereinigung kantonaler Feuerversicherungen, Bundesstr. 20, 3011 Bern, Schweiz). |
| Abbindezeit: | Wird ermittelt, indem man ein Holzstäbchen in die reagierende Polymerschmelze eintaucht und wieder heraushebt. Charakterisiert den Zeitpunkt, ab dem sich die Polymerschmelze verhärtet. |
| Klebfreizeit: | Charakterisiert die Beschaffenheit der Oberfläche des Schaums. Sie wird bestimmt, indem man den nicht mehr aufsteigenden Schaum mittels eines Holzstäbchens tupfend berührt. Der Zeitpunkt, ab dem kein Ankleben mehr erfolgt wird als Klebfreizeit bezeichnet. |

## Patentansprüche

1. Verfahren zur Herstellung eines Polyesterpolyols mit einer Konzentration an Ethergruppen im Bereich zwischen 9.0 mol/kg Polyesterpolyol und 22 mol/kg Polyesterpolyol, **dadurch gekennzeichnet, dass**
(i) im ersten Schritt
(A) Isophthalsäure, ggf. in Form eines C₁-C₄ Alkylesters, und/oder Terephthalsäure, ggf. in Form eines C₁-C₄ Alkylesters, mit
(B) Oligoethylenglykol der Formel H-(OCH₂CH₂)ₙ-OH mit einer zahlenmittleren Anzahl Oxyethylengruppen n im Bereich zwischen 3.0 und 9.0
in Gegenwart mindestens eines Katalysators ausgewählt aus der Gruppe bestehend aus Zinn(II)-Salzen, Wismut(II)-Salzen und Titantetraalkoxylaten bei einer Temperatur im Bereich zwischen 160 °C und 240 °C und einem Druck im Bereich zwischen 1 und 1013 mbar für eine Dauer im Bereich zwischen 7 und 100 Stunden umgesetzt werden, und
(ii) im zweiten Schritt die aus Schritt (i) resultierende Reaktionsmischung mit
(C) Phthalsäure und/oder Phthalsäureanhydrid
umgesetzt wird.

2. Verfahren gemäß Anspruch 1, **dadurch gekennzeichnet, dass** die Komponente (A) in einer Menge von 8 bis 50 Gew.-% bezogen auf die Gesamtmenge der Mischung vorliegt.

3. Verfahren gemäß einem der Ansprüche Anspruch 1 oder 2, **dadurch gekennzeichnet, dass** die Komponente (B) in einer Menge von 50 bis 92 Gew.-% bezogen auf die Gesamtmenge der Mischung vorliegt.

4. Verfahren gemäß einem oder mehreren der Ansprüche 1 bis 3, **dadurch gekennzeichnet, dass** die Komponente (C) in einer Menge von 1 bis 25 Gew.-% bezogen auf die Gesamtmenge der Mischung vorliegt.

5. Verfahren gemäß einem oder mehreren der Ansprüche 1 bis 4, **dadurch gekennzeichnet, dass** das Polyesterpolyol eine Hydroxylzahl im Bereich zwischen 100 mg KOH/g und 400 mg KOH/g aufweist.

6. Verfahren gemäß einem oder mehreren der Ansprüche 1 bis 5, **dadurch gekennzeichnet, dass** das Polyesterpolyol eine Viskosität gemessen nach DIN 53019 im Bereich zwischen 400 mPas und 10000 mPas bei 25 °C aufweist.

7. Verfahren gemäß einem oder mehreren der Ansprüche 1 bis 6, **dadurch gekennzeichnet, dass** das Oligoethylenglykol (B) eine zahlenmittlere Anzahl Oxyethylengruppen n im Bereich zwischen 3.1 und 9 aufweist.

8. Verfahren gemäß einem oder mehreren der Ansprüche 1 bis 7, **dadurch gekennzeichnet, dass** das Polyesterpolyol einen Schmelzpunkt im Bereich zwischen -40 °C und 25 °C aufweist.

9. Verfahren gemäß einem oder mehreren der Ansprüche 1 bis 8, **dadurch gekennzeichnet, dass** die Komponenten (A) und (B) in Gegenwart mindestens eines Katalysators ausgewählt aus der Gruppe bestehend aus Zinn-(II)-chlorid, Wismut(II)-chlorid, Titantetramethanolat und Titantetraethanolat umgesetzt werden.

10. Verfahren gemäß einem oder mehreren der Ansprüche 1 bis 9, **dadurch gekennzeichnet, dass** die Katalysatoren ausgewählt aus der Gruppe bestehend aus Zinn(II)-Salzen, Wismut(II)-Salzen und Titantetraalkoxylaten in Summe in einer Menge von 20 bis 200 ppm (bezogen auf die Summe der Gewichtsteile aller Einsatzkomponenten A bis C) eingesetzt werden.

11. Polyesterpolyol erhältlich nach einem Verfahren einem oder mehreren der Ansprüche 1 bis 10.

12. Verwendungen eines Polyesterpolyols gemäß Anspruch 11 zur Herstellung eines PUR-, bzw. PUR/PIR-Schaumstoffes.

13. Verfahren zur Herstellung eines PUR-, bzw. PUR/PIR-Schaumstoffes umfassend die Schritte
a) Umsatz wenigstens eines Polyesterpolyols nach Anspruch 11 mit
b) wenigstens einer polyisocyanathaltigen Komponente,
c) wenigstens einem Treibmittel,
d) wenigstens einem oder mehreren Katalysatoren,
e) gegebenenfalls wenigstens einem Flammschutzmittel und/oder weiteren Hilfs- und Zusatzstoffen
f) gegebenenfalls wenigstens einer Verbindung mit mindestens zwei gegenüber Isocyanat reaktiven Gruppen.

14. PUR-, bzw. PUR/PIR-Schaumstoff erhältlich nach dem Verfahren nach Anspruch 13.

15. Verwendung eines PUR-, bzw. PUR/PIR-Schaumstoffes erhältlich nach dem Verfahren nach Anspruch 13 zur Herstellung von gedämmten Rohren, Sandwichelementen, Dämmplatten oder Kühlgeräten.

## Claims

1. Process for producing a polyester polyol with a concentration of ether groups in the range between 9.0 mol/kg polyester polyol and 22 mol/kg polyester polyol, **characterized in that**
(i) in the first step
(A) isophthalic acid, optionally in the form of a C₁-C₄ alkyl ester, and/or terephthalic acid, optionally in the form of a C₁-C₄ alkyl ester, are reacted with
(B) oligoethylene glycol of the formula H-(OCH₂CH₂)ₙ-OH in which the number-average number of oxyethylene groups n is in the range between 3.0 and 9.0
in the presence of at least one catalyst selected from the group consisting of tin(II) salts, bismuth(II) salts and titanium tetraalkoxylates at a temperature in the range between 160°C and 240°C and a pressure in the range between 1 and 1013 mbar for a period in the range between 7 and 100 hours, and
(ii) in the second step the reaction mixture resulting from step (i) is reacted with (C) phthalic acid and/or phthalic anhydride.

2. Process according to Claim 1, **characterized in that** the component (A) is present in an amount of 8 to 50 wt% based on the total amount of the mixture.

3. Process according to one of the claims Claim 1 or 2, **characterized in that** the component (B) is present in an amount of 50 to 92 wt% based on the total amount of the mixture.

4. Process according to one or more of Claims 1 to 3, **characterized in that** the component (C) is present in an amount of 1 to 25 wt% based on the total amount of the mixture.

5. Process according to one or more of Claims 1 to 4, **characterized in that** the polyester polyol has a hydroxyl number in the range between 100 mg KOH/g and 400 mg KOH/g.

6. Process according to one or more of Claims 1 to 5, **characterized in that** the polyester polyol has a viscosity measured in accordance with DIN 53019 in the range between 400 mPas and 10 000 mPas at 25°C.

7. Process according to one or more of Claims 1 to 6, **characterized in that** the oligoethylene glycol (B) has a number-average number of oxyethylene groups n in the range between 3.1 and 9.

8. Process according to one or more of Claims 1 to 7, **characterized in that** the polyester polyol has a melting point in the range between -40°C and 25°C.

9. Process according to one or more of Claims 1 to 8, **characterized in that** the components (A) and (B) are reacted in the presence of at least one catalyst selected from the group consisting of tin(II) chloride, bismuth(II) chloride, titanium tetramethanolate and titanium tetraethanolate.

10. Process according to one or more of Claims 1 to 9, **characterized in that** the catalysts selected from the group consisting of tin(II) salts, bismuth(II) salts and titanium tetraalkoxylates are used in total in an amount of 20 to 200 ppm (based on the sum of the parts by weight of all feed components A to C).

11. Polyester polyol obtainable by a process according to one or more of Claims 1 to 10.

12. Uses of a polyester polyol according to Claim 11 for producing a PUR or PUR/PIR foam.

13. Process for producing a PUR or PUR/PIR foam comprising the steps of
a) reacting at least one polyester polyol according to Claim 11 with
b) at least one polyisocyanate-containing component,
c) at least one blowing agent,
d) at least one or more catalysts,
e) optionally at least one flame retardant and/or further auxiliary and additive substances,
f) optionally at least one compound with at least two isocyanate-reactive groups.

14. PUR or PUR/PIR foam obtainable by the process according to Claim 13.

15. Use of a PUR or PUR/PIR foam obtainable by the process according to Claim 13 for producing insulated pipes, sandwich elements, insulation panels or cooling equipment.

## Revendications

1. Procédé de fabrication d'un polyester-polyol ayant une concentration en groupes éther dans la plage comprise entre 9,0 mol/kg de polyester-polyol et 22 mol/kg de polyester-polyol, **caractérisé en ce que**
(i) lors de la première étape,
(A) de l'acide isophtalique, éventuellement sous la forme d'un ester alkylique en C₁-C₄, et/ou de l'acide téréphtalique, éventuellement sous la forme d'un ester alkylique en C₁-C₄, est mis en réaction avec
(B) un oligoéthylène-glycol de formule H-(OCH₂CH₂)ₙ-OH contenant un nombre moyen en nombre de groupes oxyéthylène n dans la plage comprise entre 3,0 et 9,0
en présence d'au moins un catalyseur choisi dans le groupe constitué par les sels d'étain (II), les sels de bismuth (II) et les tétraalcoxylates de titane, à une température dans la plage comprise entre 160 °C et 240 °C et à une pression dans la plage comprise entre 1 et 1013 mbar, pendant une durée dans la plage comprise entre 7 et 100 heures, et
(ii) lors de la seconde étape, le mélange réactionnel résultant de l'étape (i) est mis en réaction avec
(C) de l'acide phtalique et/ou de l'anhydride de l'acide phtalique.

2. Procédé selon la revendication 1, **caractérisé en ce que** le composant (A) est présent en une quantité de 8 à 50 % en poids par rapport à la quantité totale du mélange.

3. Procédé selon l'une quelconque des revendications 1 ou 2, **caractérisé en ce que** le composant (B) est présent en une quantité de 50 à 92 % en poids par rapport à la quantité totale du mélange.

4. Procédé selon une ou plusieurs des revendications 1 à 3, **caractérisé en ce que** le composant (C) est présent en une quantité de 1 à 25 % en poids par rapport à la quantité totale du mélange.

5. Procédé selon une ou plusieurs des revendications 1 à 4, **caractérisé en ce que** le polyester-polyol présente un indice hydroxyle dans la plage comprise entre 100 mg KOH/g et 400 mg KOH/g.

6. Procédé selon une ou plusieurs des revendications 1 à 5, **caractérisé en ce que** le polyester-polyol présente une viscosité mesurée selon DIN 53019 dans la plage comprise entre 400 mPas et 10 000 mPas à 25°C.

7. Procédé selon une ou plusieurs des revendications 1 à 6, **caractérisé en ce que** l'oligoéthylène-glycol (B) présente un nombre moyen en nombre de groupes oxyéthylène n dans la plage comprise entre 3,1 et 9.

8. Procédé selon une ou plusieurs des revendications 1 à 7, **caractérisé en ce que** le polyester-polyol présente un point de fusion dans la plage comprise entre -40 °C et 25°C.

9. Procédé selon une ou plusieurs des revendications 1 à 8, **caractérisé en ce que** les composants (A) et (B) sont mis en réaction en présence d'au moins un catalyseur choisi dans le groupe constitué par le chlorure d'étain (II), le chlorure de bismuth (II), le tétraméthanolate de titane et le tétraéthanolate de titane.

10. Procédé selon une ou plusieurs des revendications 1 à 9, **caractérisé en ce que** les catalyseurs choisis dans le groupe constitué par les sels d'étain (II), les sels de bismuth (II) et les tétraalcoxylates de titane sont utilisés au total en une quantité de 20 à 200 ppm (par rapport à la somme des parties en poids de tous les composants A à C utilisés).

11. Polyester-polyol pouvant être obtenu par un procédé selon une ou plusieurs des revendications 1 à 10.

12. Utilisations d'un polyester-polyol selon la revendication 11 pour la fabrication d'une mousse de PUR ou de PUR/PIR.

13. Procédé de fabrication d'une mousse de PUR ou de PUR/PIR comprenant les étapes suivantes :
a) la mise en réaction d'au moins un polyester-polyol selon la revendication 11 avec
b) au moins un composant contenant un polyisocyanate,
c) au moins un agent gonflant,
d) au moins un ou plusieurs catalyseurs,
e) éventuellement au moins un agent ignifuge et/ou des adjuvants et additifs supplémentaires,
f) éventuellement au moins un composé contenant au moins deux groupes réactifs avec les isocyanates.

14. Mousse de PUR ou de PUR/PIR pouvant être obtenue par le procédé selon la revendication 13.

15. Utilisation d'une mousse de PUR ou de PUR/PIR pouvant être obtenue par le procédé selon la revendication 13 pour la fabrication de tubes isolés, d'éléments en sandwich, de plaques isolantes ou d'appareils réfrigérants.
